Europäisches Patentamt

European Patent Office

Office européen des brevets

(11) Publication number: **0 486 736 A1**

# EUROPEAN PATENT APPLICATION

(21) Application number: 90312656.3

(22) Date of filing: 21.11.90

(51) Int. Cl.⁵: **A21D 13/00**

(43) Date of publication of application:
**27.05.92 Bulletin 92/22**

(84) Designated Contracting States:
**AT BE CH DE DK ES FR GB GR IT LI LU NL SE**

(71) Applicant: **UNILEVER PLC**
**Unilever House Blackfriars**
**London EC4P 4BO(GB)**

(72) Inventor: **Barnes, Douglas J. c/o Unilever**
**Research**
**Colworth Laboratory Colworth House**
**Sharnbrook, Bedford MK44 1LO(GB)**
Inventor: **Clark, Elsie M. Unilever Research**
**Colworth Laboratory Colworth House**
**Sharnbrook, Bedford MK44 1LO(GB)**
Inventor: **Denton, Saffron Unilever Research**
**Colworth Laboratory Colworth House**
**Sharnbrook, Bedford MK44 1LO(GB)**

(74) Representative: **Roscoe, Brian Corrie et al**
**UNILEVER PLC Patents Division P.O. Box 68**
**Unilever House**
**London EC4P 4BO(GB)**

(54) **Food product.**

(57) Flat food product having a size suitable for reheating in a domestic toaster, comprising an expanded dough product and a filling material extending between the larger surfaces of the product.

*Fig. 1.*

The invention relates to a generally flat food product comprising an expanded dough product alternating with at least one area of filling material, which product has suitable dimensions for heating up in toaster equipment. The simplest embodiment of this product comprises two slices of bread sandwiching ham and cheese, either sliced or shredded, also known as a "tosti" or toasted sandwich.

The invention seeks to improve the flavour, taste and structure of this type of products and provides thereto a generally flat food product having a size accommodated to the size of domestic toasters, comprising an expanded dough product alternating with at least one area of filling material which product is being characterised in that the filling material is arranged in at least one area, extending between the two larger surfaces of the product. In a preferred embodiment with respect to the manufacture thereof, the product is a layered one, having alternating layers of the dough product and of the filling material, the succession of the layers being in the direction of at least one of the larger dimensions of the product.

In a more preferred embodiment for better coherence in the product this succession is in the direction of both larger dimensions, or with other words: the layers are arranged concentrically or for easier manufacture preferably spiral shaped.

In another preferred embodiment having a good cohesion even in hot conditions, the expanded dough product is forming a matrix, almost like a honeycomb, in which areas of filling material are distributed.

The size of the food product is conveniently to fit into a domestic toaster, i.e. the dimensions are in order of those of a slice of bread, while the thickness may range from ½ to 4 cm and for better coherence and reheating properties preferably from 1 to 3 cm.

The invention also provides for a method for manufacturing a food product as described before, comprising sheeting a chemically or yeast leavened dough to a sheet, parbaking it, arranging a filling material and the dough sheet into an alternating arrangement, setting the structure so obtained, and cutting the structure into slices.

This setting is preferably brought about by heat setting, what may be effected simultaneously with pasteurizing.

Conveniently the product is made like a Swiss roll by arranging the filling material into a layer on top of the dough sheet and rolling the composite sheet to become a log. Heat setting the filling material is preferably done by microwaving to prevent an uneven degree of doneness.

For a good structure and coherence the filling material preferably is made to contain a settable binding agent, which is preferably heat settable. Suitable examples thereof being starch, gelatin, modified starch, albumin, e.g. egg albumin.

The honeycomb-like embodiment may be made by coextruding the dough and the filling material into a log, setting the extruded log and slicing the log into slices of suitable thickness. Finally the slices are wrapped and frozen. In a preferred embodiment the log is frozen to a semi-rigid condition for easier slicing and thereafter fully frozen to usual storage temperatures.

Filling material in this specification and claims is defined as a mixture of several components, at least one particulate and another arranged as a matrix to keep the particulate material together.

The invention will be elucidated in the following description of some preferred embodiments having regard to the drawings in which:

Fig 1 shows a schematic perspective view of an embodiment of the invented food product,

Fig 2 is a schematic perspective view of a modified embodiment,

Fig 3 is a schematic perspective view of another embodiment, and

Fig. 4 is a schematic perspective view of still another embodiment.

EXAMPLE I

In a conventional dough mixer a dough was prepared from

| | |
|---|---|
| 45,74% | wheat flour (10,5 to 13% protein) |
| 17,15% | soft grains |
| 1,72% | yeast |
| 1,03% | salt |
| 1,20% | butter |
| 33,16% | water |

Thereafter the dough was allowed to rest for 45 minutes and subsequently sheeted to sheets of 3 mm thickness on a pastry brake. The sheets were proofed at 38°C and 75% RH for 15 minutes, thereafter docked and finally baked for 8 minutes at 190°C. After 10 minutes cooling on a wire tray the sheet was sectioned to pieces of 18 cm wide and 63 cm length.

## A filling was prepared from

| | |
|---|---|
| 7,01% | margarine |
| 11,68% | onions |
| 14,60% | mushrooms |
| 8,76% | red peppers |
| 7,01% | sweetcorn |
| 17,52% | cooked smoked ham (shredded) |
| 0,88% | salt |
| 0,09% | white pepper |
| 0,47% | broth powder |
| 0,06% | garlic paste |
| 4,67% | cream (32% fat) |
| 0,82% | modified starch (colflo 67$^{tm}$) |
| 0,18% | fresh parsley |

| | | | |
|---|---|---|---|
| | | 1,84% | margarine |
| 17,51% | cheese mix | 7,84% | Gouda cheese |
| | | 5,99% | melting cheese |
| | | 1,84% | cream (32% fat) |

The cheese mix was prepared by mixing the four ingredients thereof after melting the cheese and margarine in a microwave oven. For preparing the filling margarine was heated in a sauce pan and subsequently the chopped onions, garlic paste, mushroom, peppers, broth, salt and pepper were added and gently cooked for about 10 minutes. Thereafter a blend of cream and modified starch was added and the mixture cooked for another 4 minutes. After removal of the pan from the heat source ham, sweetcorn and chopped parsley were added and mixed, whereafter the cheese mix was beaten into the filling while still hot. Thereafter the filling was cooled down to room temperature and 5% hens egg albumin and 2% instant clearjel (tm), a modified starch, was whisked in (percentage calculated on the weight of the prepared filling mass).

This filling was coated onto the dough sheets in a thickness of about 1 cm and the coated dough sheets were rolled up to logs. The logs, weighing about 1kg each, were sprayed with a mist of water and thereafter heated for 10 minutes in a microwave oven of 650 W at half power. Halfway this heating another spraying step was effected. After microwaving the logs were 10 mins heated in a steam oven at about 70°C.

After cooling down to chill temperature the logs were cut to slices of about 1 cm thickness which were frozen to -30°C and stored.

The slices were prepared for consumption by heating in a conventional domestic toaster during two heating cycles, the first at medium and the second at high power setting.

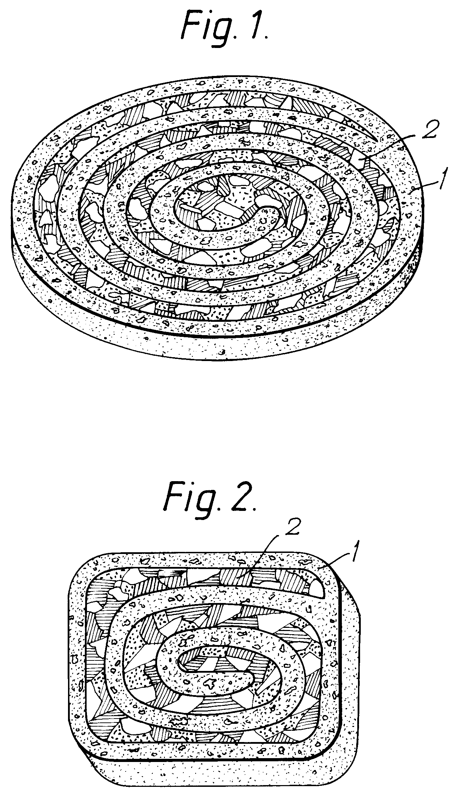

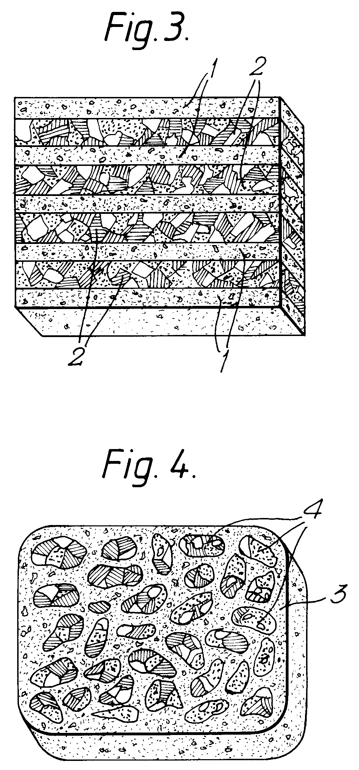

The product obtained by the above method is shown in Fig 1. In this figure a spiral shaped dough strip 1 is enclosing the filling 2. Alternative layered embodiments are shown in Figs 2 and 3.

The product in Fig 2 was obtained by deforming the cross section of the log as obtained in example 1 to become rectangular.

The product of Fig 3 was obtained by putting four coated dough sheets on top of each other and topping the stack so obtained finally with a bare dough sheet. The loaf shaped layered product was finally cut into slices of about 1 cm thickness.

The product of Fig. 4 was obtained by coextruding the dough and the filling material to become an elongate log 3 of dough having a cross section of 10 x 13 cm and comprising a multiplicity of separate strands 4 of filling material longitudinally extending therethrough. After setting the log was transversely cut into slices of 1½ cm thickness.

EXAMPLE II

The procedure of Example I was repeated using

| | |
|---|---|
| 58,75% | wheat flour |
| 1,59% | yeast |
| 1,06% | salt |
| 6,28% | butter |
| 2,11% | sugar |
| 7,57% | egg |
| 22,67% | water |

for preparing the dough.

After sheeting the dough to 5 mm thickness a mixture of sesame seeds, pumpkin seeds, and chopped peanuts was sprinkled on, such that the sheet was entirely covered with a monolayer. Thereafter the thickness was reduced to 2.5mm.

After parbaking and sectioning to pieces as described before a filling was spread on top of the sectioned pieces, the filling comprising

```
     3.45%    margarine
    10,73%    onions
    15,33%    sieved tomatoes
    15,56%    red peppers
    15,56%    green peppers
    17,32%    cooked, smoked ham
     0,57%    modified starch (colflo 67)
     1,53%    flour
     2,61%    water
     2,61%    cream, 32% fat
     0,77%    salt
     0,65%    spices
     0,83%    herbs
                              1,21%    margarine
    11,49%    cheese mix        5,14%    Gouda cheese
                              3,93%    melting cheese
                              1,21%    cream (32% fat)
```

The preparation of the filling was similar to that described in Example 1. Finally 3% hens egg albumin and 2% of instant clearjel were whisked in as in example 1. The preparation of the logs, heating, slicing and freezing was as described in example 1.

All percentages and ratios in this specification and claims refer to weight, unless otherwise indicated.

**Claims**

1. Generally flat, food product having a size accommodated to the size of domestic toasters, comprising an expanded dough product alternating with a layer of filling material, characterised in that the filling material is arranged in at least one area, extending between the two larger surfaces of the product.

2. Food product according to claim 1, characterised in that it is layered, having alternating layers of the dough product and of the filling material, the succession of the layers being in the direction of at least one of the larger dimensions of the product.

3. Food product according to claim 2, characterised in that the succession of the layers is in the direction of both larger dimensions.

4. Food product according to claim 3, characterised in that the layers are arranged in a spiral shape.

5. Food product according to claim 1, characterised in that the expanded dough product is forming a matrix in which areas of filling material are distributed.

**6.** Food product according to any one of claims 1 to 5, characterised in that it is deep frozen.

**7.** Food product according to any one of claims 1 to 6, characterised in that the thickness is from $\frac{1}{2}$ to 4 cm and preferably from 1 to 3 cm and the other dimensions are in the order of those of a slice of bread.

**8.** Method for manufacturing a food product according to claim 2, 3, or 4, comprising sheeting a chemically or yeast leavened dough to a sheet, parbaking it, arranging a filling material and the dough sheet into an alternating arrangement, setting the structure so obtained, and cutting the structure into slices.

**9.** Method according to claim 8, characterised in that the filling material is arranged into a layer on top of the dough sheet and rolling the composite sheet to become a log.

**10.** Method according to claim 8, characterised in that setting is done by microwaving.

**11.** Method according to claim 8 or 10, characterised in that the filling material is made to contain a heat settable binding agent.

5

Fig. 1.

Fig. 2.

## Fig. 3.

## Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 342 124 (M.G.A. GOUE) * Claims 1-8; column 1, lines 6-29; column 2, lines 3-24,50-21 * | 1,3-8, 11 | A 21 D 13/00 |
| X | DE-A-3 709 703 (K. HOFFMANN) * Claims 1-9; column 2, lines 58-64; figure 1; column 2, line 68 - column 3, line 116; column 3, lines 21-25 * | 1-4,6-9 ,11 | |
| X | DE-C- 552 602 (J. CARSTENSEN) * Claim * | 1-4,8,9 | |
| X | NL-A-8 100 325 (A.A. TER BEEK B.V.) * Page 1, lines 1-12; page 2, lines 17-27; page 4, lines 8-9,12-19; claims 1-5 * | 1-3,7 | |
| X | US-A-3 250 626 (R.J. THELEN) * Claims 1,2,3,4; column 1, lines 25-32; column 2, line 53 - column 3, line 7; column 3, lines 51-60; column 3, line 70 - column 4, line 18; examples 2,3 * | 1-4,6-9 ,11 | TECHNICAL FIELDS SEARCHED (Int. Cl.5) A 21 D |
| X | DE-C- 846 233 (E. PÖTZL) * Claims 1,2; ex. * | 1-3,7 | |

The present search report has been drawn up for all claims

| Place of search | Date of completion of the search | Examiner |
|---|---|---|
| THE HAGUE | 05-07-1991 | COUCKE A.O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................................
& : member of the same patent family, corresponding document

EPO FORM 1503 03.82 (P0401)